# EUROPEAN PATENT APPLICATION

(11) **EP 4 239 561 A1**
(43) Date of publication of application: **06.09.2023**
(21) Application number: 23159039.9
(22) Date of filing: 28.02.2023
(51) Int. Cl.: G06Q 40/04

(54) **MULTI-DIMENSIONAL DECISION-MAKING METHOD FOR IMPROVING RATE OF RETURN OF FINANCIAL COMMODITIES**

(30) Priority: 03.03.2022 TW 111107785
(71) Applicant: Goldentera Digital Technology Co., Ltd., Keelung City 206007 (TW)
(72) Inventor: CHO, Sheng-Tseng, 206007 Taiwan (TW)
(74) Representative: Renaudo, Adrien Hanouar

(57) **Abstract**

A multi-dimensional decision-making method for improving the rate of return of a financial commodity on an investment comprises using at least one indicator decision-making for a financial commodity; under a fixed base period and a decision-making indicator, a plurality of divided time periods selected to make position weight optimization decision-making at the same time. According to the investment risk degree, the effective annualized rate of return on investment of cumulative profit and loss of different divided time periods in a comparison period is ranked, and the position weight ratio is intelligently optimized to obtain the improved rate of return on investment of the financial commodity after multi-time-divided dynamic weighted optimization. According to the multi-dimensional decision-making method, the rate of return on investment of financial commodity and financial commodity portfolio thereof can be improved to achieve the expected investment objectives and performance of the investor.

## Description

### BACKGROUND OF THE INVENTION

### 1. Field of the Invention

The present invention relates to an investment method applied to financial commodities, in particular to a multi-dimensional decision-making method which can improve rate of return on investment.

### 2. Description of the Related Art

Stock and other financial commodities have always been the most popular financial management mode for investors. Generally, the investors often make decisions on bull/bear trading direction and price and time point decision of financial commodities based on single technical indicator decision-making or an individual time-divided trend chart, and personal intuitive experience or a traditional technical indicator. However, for the investors, the accuracy of the bull/bear direction and predictability of the price trend are still lacking in the existing methods. For the investors, if a simple operation and a credible bull/bear direction and a reliable decision-making method of the price trend can reduce systematic risks, optimize and improve the performance of the predicted rate of return of an individual financial commodity and the overall investment portfolio, it is absolutely the expectation of general investors.

Therefore, how to develop a multi-dimensional decision-making method for improving the rate of return of a financial commodity on an investment is an urgent problem that a person skilled in the art eagers to solve.

### SUMMARY OF THE INVENTION

The scope of the present invention is to provide a multi-dimensional decision-making method for improving the rate of return of a financial commodity on an investment, which is used for calculating on the basis of a plurality of transaction data in a stock market database. The plurality of transaction data respectively contains data of a corresponding financial commodity, a financial commodity portfolio, stock symbol, date and price of a plurality of investment targets.

The method comprises using a data acquisition module, using a data calculation module, and using an output/display device; the data acquisition module is coupled with an external stock market database, and the data calculation module is coupled with the data acquisition module; and the data calculation module comprises a transaction data set, a control instruction, an input device and a decision index calculator;
the transaction data set of the data calculation module is coupled with the data acquisition module, which acquires a plurality of transaction data from the stock market database and stores the plurality of transaction data into the transaction data set;
the control instruction is coupled with the decision index calculator;
the control instruction is used for carrying out the following steps for the financial commodity:
   step 1: selecting an investment technical index method for the financial commodity, wherein the investment technical indicator method comprises but is not limited to a technology used by a stock bull/bear trading decision-making system;
   step 2: following step 1, setting a fixed base period which has an intra-period trading day; during the fixed base period, selecting a plurality of divided time periods for the financial commodity according to the investment technical indicator method, which are calculated by the decision index calculator; obtaining bull/bear trading triggering price points of each divided time period at the same time; according to an investment risk degree predetermined by the system or selected by an investor, using the investment technical indicator method to account the profit and loss spread of bull/bear trading triggering prices of the period; obtaining the profit and loss spread of each divided time period and the effective annualized rate of return on investment of cumulative profit and loss of the financial commodity before the closing of the fixed base period in the plurality of divided time periods; and ranking according to the effective annualized rate of return on investment of the cumulative profit and loss;
wherein, the technology used by [the stock bull/bear trading decision-making system] in step 1 refers to the technology disclosed in the patent invention No. 1436297 in Taiwan province [a stock bull/bear decision-making system]. The algorithm of the dynamic bull/bear decision-making system in the present invention comprises the following parameters: a bull/bear decision factor β calculated during or after the market, wherein β= (I×W1+J×W2+K×W3)÷C4+(1+θ×W4), where W1, W2, W3, W4 and C4 are the optimal weight values decided by the decision-making system; θ is the relative on-balance volume obtained by comparing today's stock market estimated volume divided by yesterday's stock market volume with the today's estimated volume of a stock divided by the yesterday's volume of the stock to obtain a real-time θ value; the opening strength I of the current day is calculated by comparing the difference between today's opening price and yesterday's closing price of a stock with the yesterday's closing price, and then selectively allocating a weight value C1 by the decision-making system to obtain the value I; the intraday real-time strength J is obtained by comparing the intraday trading price and the today's opening price of a stock with the today's opening price, and then selectively allocating a weight value C2 by the decision-making system to obtain the value J; and the intraday price amplitude K is obtained by comparing the difference between today's intraday highest price and lowest price of a stock with the yesterday's closing price of the stock and then selectively allocating a weight value C3 by the decision-making system to obtain the value K; a risk control interval (β2,β1) can be set by an investor or calculated by the decision-making system; when the bull/bear decision factor β > β1, a bull/buy signal is determined, and at this time the price of financial commodity is the buying triggering price; when the bull/bear decision factor β < β2, a bear/sell signal is determined, and the price of the financial commodity is the selling triggering price;
wherein the time-divided bull/bear trading triggering price points in step 2 refers to the selling triggering price and buying triggering price of the financial commodity in different divided time periods obtained according to the investment technical indicator method, and the spread and profit and loss value of an individual divided time period of the current period can be accounted;
wherein the plurality of divided time periods refers to a plurality of different time periods. For example, if the divided time period is 15 minutes, every 15 minute is taken as a period, and the selling triggering price and buying triggering price of each period are obtained according to the investment technology indicator method in each period;
step 3: following step 2, carrying out different operations according to the investment risk degree predetermined by the system or selected by the investor as follows: continuing with step 4 in case of a bull operation; continuing with step 5 in case of a bear operation; and continuing with step 6 in case of a bull/bear mixed operation;
step 4: before the final closing price of the fixed base period, according to the investment risk degree predetermined by the system or selected by the investor, for the time divided bull operation of the financial commodity, at least taking the highest two effective annualized rate of return on investment of the cumulative profit and loss of the divided time period, so as to assign the weight ratios of bull operation positions for the subsequent period of the last trading day of the intra-period trading days adjacent to the fixed base period, wherein for the effective annualized rate of return on investment of the cumulative profit and loss of the divided time period with a higher ranking, the weight ratio of bull operation position is higher or not lower than that of the effective annualized rate of return on investment of the cumulative profit and loss of the divided time period with a lower ranking;
the prediction of the bull/bear attribute and price trend of the financial commodity is dominated by the weight of the position configured for bull operation after entering the subsequent period at the end of the fixed base period, so that the bull/bear attribute and price trend of an individual stock of the financial commodity can be predicted period by period, and the accuracy of the bull operation direction of the financial commodity in the subsequent period can be optimized and improved;
step 5: in the fixed base period, according to the investment risk degree predetermined by the system or selected by the investor, for the time-divided bear operation of the financial commodity, at least taking the lowest two effective annualized rate of return on investment of the cumulative profit and loss of the divided time period, so as to assign the weight ratios of bear operation positions for the subsequent period of the last trading day of the intra-period trading days adjacent to the fixed base period, wherein for the effective annualized rate of return on investment of the cumulative profit and loss of the divided time period with a lower ranking, the weight ratio of bear operation position is higher or not lower than that of the effective annualized rate of return on investment of the cumulative profit and loss of the divided time period with a higher ranking;
the prediction of the bull/bear attribute and price trend of the financial commodity is dominated by the weight of the position configured for bear operation after entering the subsequent period at the end of the fixed base period, so that the bull/bear attribute and price trend of an individual stock of the financial commodity can be predicted period by period, and the accuracy of the bear operation direction of the financial commodity in the subsequent period can be optimized and improved;
step 6: during the fixed base period, according to the investment risk degree predetermined by the system or selected by the investor, for simultaneous hedging operations of the time-divided bull operation and time-divided bear operation of the financial commodity, at least taking the highest two and lowest two effective annualized rate of return on investment of the cumulative profit and loss of the divided time period, wherein for the effective annualized rate of return on investment of the cumulative profit and loss of the divided time period with a higher ranking, the weight ratio of the bull operation position is higher or not lower than that of effective annualized rate of return on investment of the cumulative profit and loss of the divided time period with a lower ranking in the subsequent period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period;
in this way, for the financial commodity, from the effective annualized rate of return on investment of individual operating profit and loss and cumulative profit and loss of each divided time period before the final closing price of the fixed base period and the ranking thereof, the weight ratio of each time-divided bull operation/bear operation position in the subsequent period of a plurality of time-divided bull/bear mixed operations can be obtained by comparing and accounting;
the prediction of the bull/bear attribute and price trend of the financial commodity is dominated by a new set value of weight of a bull/bear mixed operation position optimized by multi-dimension time-divided decision-making after entering the subsequent period at the end of the fixed base period, so that the bull/bear attribute and price trend of an individual stock of the financial commodity can be predicted period by period, and the accuracy of the bull/bear mixed operation direction of the financial commodity in the subsequent period and the efficiency of the effective annualized rate of return on investment of cumulative profit and loss can be optimized and improved. In addition, due to the synchronous time-divided bull operation and time-divided bear operation mixed spread and position weight ratio hedging operation, the systemic risk of individual stock of the financial commodity can be greatly reduced;
in the above method, a step 7 can be added after step 4 if the bull operation is carried out, a step 8 can be added after step 5 if the bear operation is carried out, and a step 9 can be added after step 6 if the bull/bear mixed operation is carried out:
   step 7: setting a first comparison period, wherein the first comparison period has an intra-period trading day, the intra-period trading day of the first comparison period follows the intra-period trading day of the fixed base period;
   before the final closing price of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
   according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
   at the same time, by accounting the financial commodity up to the current period, the product term of the position weight ratios of individual divided time periods and the profit and loss values of the individual divided time periods for the bull operation is accumulated into the total profit and loss of the current period, which is used for accounting and recording the cumulative total profit and loss and the effective annualized rate performance of return on investment of the bull operation of the financial commodity until the first comparison period;
   taking at least the highest two effective annualized rate of return on investment of the cumulative profit and loss of the profit and loss value of each divided time period of financial commodity before the closing price of the last trading day of the first comparison period, and assigning and recording the position weight of the bull operation time-divided of financial commodity as the newly optimized position weight ratio of divided time period of the financial commodity in the subsequent period;
   in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time; as the ranking of effective annualized rate of return on investment of cumulative profit and loss can be used for assigning and optimizing a position weight ratio, the effectiveness of position weight under the bull operation of the individual financial commodity can be optimized and improved period by period, so as to multi-dimensionally adjust, optimize and improve the effective annualized rate performance of return on investment of the individual financial commodity during the subsequent comparison period period by period; therefore, the multi-dimensional intelligent decision-making method can adjust, optimize and improve the effective annualized rate performance of return on investment of the individual financial commodity during the subsequent comparison period.
   step 8: setting a first comparison period, wherein the first comparison period has an intra-period trading day, the intra-period trading day of the first comparison period follows the intra-period trading day of the fixed base period;
   before the final closing price of the current period of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
   according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
   at the same time, by accounting the financial commodity up to the current period, the product term of the position weight ratios of individual divided time periods and the profit and loss values of the individual divided time periods for the bear operation is accumulated into the total profit and loss of the current period, which is used for accounting and recording the cumulative total profit and loss and the effective annualized rate performance of return on investment of the bear operation of the financial commodity until the first comparison period;
   taking at least the lowest two effective annualized rate performance of return on investment of the profit and loss value of each divided time period of financial commodity before the closing price of the last trading day of the first comparison period, and assigning and recording the position weight of the bear operation time-divided of financial commodity as the newly optimized position weight ratio of divided time period of the financial commodity in the subsequent period;
   in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time; as the ranking of effective annualized rate performance of return on investment of cumulative profit and loss can be used for assigning and optimizing a position weight ratio, the effectiveness of position weight under the bear operation of the individual financial commodity can be optimized and improved period by period, so as to multi-dimensionally optimize and improve the effective annualized rate performance of return on investment of cumulative profit and loss of the financial commodity during the subsequent comparison period period by period; therefore, the multi-dimensional intelligent decision-making method can adjust, optimize and improve the effective annualized rate performance of return on investment of the individual financial commodity during the subsequent comparison period.
   step 9: setting a first comparison period, wherein the first comparison period has an intra-period trading day, the intra-period trading day of the first comparison period follows the intra-period trading day of the fixed base period;
   before the final closing price of the current period of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
   according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
   at the same time, by accounting the financial commodity up to the current period, the product term of the position weight ratios of individual divided time periods and the profit and loss values of the individual divided time periods for the bull/bear mixed operation is accumulated into the total profit and loss of the current period, which is used for accounting and recording the cumulative total profit and loss and the effective annualized rate performance of return on investment of the bull/bear mixed operation of the financial commodity until the first comparison period;
   next, taking at least two highest and two lowest effective annualized rate of return on investment of the profit and loss value of each divided time period of the financial commodity before the closing price of the last trading day in the first comparison period, wherein for the effective annualized rate of return on investment of the cumulative profit and loss with a higher ranking, the weight ratio of the bull operation position is higher or not lower than that of effective annualized rate of return on investment of the cumulative profit and loss of the divided time period with a lower ranking in the following period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period, as the position weight of each divided time period of the financial commodity in the following period;
   in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time; therefore, the multi-dimensional intelligent decision-making method can adjust, optimize and improve the effective annualized rate performance of return on investment of the individual financial commodity during the subsequent comparison period.
   in the above method, step 10 can be added after step 7 if the bull operation is carried out, step 11 can be added after step 8 if the bear operation is carried out, and step 12 can be added after step 9 if the bull/bear mixed operation is carried out:
      step 10: setting a second comparison period, wherein the second comparison period has an intra-period trading day, the intra-period trading day of the second comparison period follows the intra-period trading day of the first comparison period;
      according to the investment technical indicator method, the calculation by the decision index calculator also obtains the cumulative value of the profit and loss spread of individual divided time periods of the financial commodity from each time-divided bull/bear trading triggering price points to the current period; before the final closing price of the current period in the first comparison period, the position weight ratio of each divided time period is optimized as the position weight ratio of each divided time period in the second comparison period;
      the effective annualized rate of return on investment of cumulative profit and loss of each time-divided can be obtained and ranked in the way of predetermining by the system or selecting by the investor; at the same time, by accounting the financial commodity up to the current period, the product term of the position weight ratios of individual divided time periods and the profit and loss values of the individual divided time periods for the bull operation is accumulated into the total profit and loss of the current period, which is used for accounting and recording the cumulative total profit and loss and the effective annualized rate performance of return on investment of the bull operation of the financial commodity until the second comparison period;
      taking at least the optimal two effective annualized rate of return on investment of the cumulative profit and loss of each time-divided comparison period of the financial commodity before the closing price of the last trading day of the second comparison period, and assigning and recording the weight of each divided time period of the financial commodity, as the position weight of each divided time period of the financial commodity in the following period;
      in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
      in the process of multi-dimensional optimization of the bull/bear direction and the ups and downs of the price of the financial commodity, the ranking of the effective annualized rate of return on investment of the cumulative profit and loss of the time-divided positions in each comparison period is adjusted period by period and position weight ratio in the following period is optimized to obtain the effective annualized rate of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of the individual financial commodity in each comparison period.
      step 11: setting a second comparison period, wherein the second comparison period has an intra-period trading day, the intra-period trading day of the second comparison period follows the intra-period trading day of the first comparison period;
      according to the investment technical indicator method, the calculation by the decision index calculator also obtains the cumulative value of the profit and loss spread of individual divided time periods of the financial commodity from each time-divided bull/bear trading triggering price points to the current period; before the final closing price of the current period in the first comparison period, the new position weight ratio of each divided time period is optimized as the position weight ratio of each divided time period in the second comparison period;
      the effective annualized rate of return on investment of cumulative profit and loss of each time-divided can be obtained and ranked in the way of predetermining by the system or selecting by the investor; at the same time, by accounting the financial commodity up to the current period, the product term of the position weight ratios of individual divided time periods and the profit and loss values of the individual divided time periods for the bear operation is accumulated into the total profit and loss of the current period and the profit and loss spread generated by each position weight in the first comparison period is accumulated, which is used for accounting and recording the cumulative total profit and loss and the effective annualized rate performance of return on investment of the bear operation of the financial commodity until the second comparison period;
      taking at least the lowest two effective annualized rate of return on investment of the cumulative profit and loss of each time-divided comparison period of the financial commodity before the closing price of the last trading day of the second comparison period, and assigning and recording the weight ranking of each divided time period of the financial commodity, as the position weight of each divided time period of the financial commodity in the following period;
      in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
      in the process of multi-dimensional optimization of the bull/bear direction and the ups and downs of the price of the financial commodity, the ranking of the effective annualized rate of return on investment of the cumulative profit and loss of the divided time periods in each comparison period is adjusted period by period and position weight ratio in the subsequent period is optimized to obtain the effective annualized rate performance of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of the individual financial commodity in each comparison period;
      step 12: setting a second comparison period, wherein the second comparison period has an intra-period trading day, the intra-period trading day of the second comparison period follows the intra-period trading day of the first comparison period;
      according to the investment technical indicator method, the calculation by the decision index calculator also obtains the cumulative value of the profit and loss spread of individual divided time periods of the financial commodity from each time-divided bull/bear trading triggering price points to the current period; before the final closing price of the current period in the first comparison period, the position weight ratio of each divided time period is optimized as the position weight ratio of each divided time period in the second comparison period;
      the effective annualized rate of return on investment of cumulative profit and loss of each time-divided can be obtained and ranked in the way of predetermining by the system or selecting by the investor; at the same time, by accounting the financial commodity up to the current period, the product term of the position weight ratios of individual divided time periods and the profit and loss values of the individual divided time periods for the bull/bear mixed operation is accumulated into the total profit and loss of the current period, which is used for accounting and recording the cumulative total profit and loss and the effective annualized rate performance of return on investment of the bull/bear mixed operation of the financial commodity until the second comparison period;
      taking at least the highest two and lowest two effective annualized rate performance of return on investment of the cumulative profit and loss of the financial commodity before the closing price of the last trading day of the second comparison period, and assigning and recording the weight ranking of each divided time period of the financial commodity, as the position weight of each divided time period of the financial commodity in the following period;
      in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
      in the process of multi-dimensional optimization of the bull/bear direction and the ups and downs of the price of the financial commodity, the ranking of the effective annualized rate of return on investment of the cumulative profit and loss of the time-divided positions in each comparison period is adjusted period by period and position weight ratio of bull operation or bear operation in the subsequent period is optimized to obtain the effective annualized rate performance of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of bull operation or bear operation of the individual financial commodity in each comparison period.
      Wherein, the effective annualized rate of return on investment of the cumulative profit and loss in step 2, step 4, step 5, step 6, step 7, step 8, step 9, step 10, step 11 and step 12 is as follows:
         during the fixed base period, the effective annualized rate of return on investment of the cumulative profit and loss is: (cumulative profit and loss of each divided time period of the fixed base period ÷ the closing price of the day previous the initial day of the fixed base period)÷(number of trading days in the accounting period×1.46÷365);
         during each comparison period, the effective annualized rate of return on investment of the cumulative profit and loss is: (cumulative profit and loss of each period until the accounting period ÷ the closing price of the day on which the fixed base period ends)÷(number of trading days in the accounting period×1.46÷365);
         the number of trading days for the accounting period mentioned above is the number of intra-period trading days during the fixed base period, is the number of intra-period trading days during the first comparison period in case of the first comparison period, is (the number of intra-period trading days during the first comparison period + the number of intra-period trading days during the second comparison period) in case of the second comparison period, and is the cumulative number of intra-period trading days during each comparative period until the subsequent intra-period in case of the subsequent intra-period.

The aforementioned (cumulative profit and loss of each period until the accounting period) is obtained as follows: obtaining the selling triggering price and buying triggering price according to the investment technical indicator in each divided time period during each comparison period, accumulating the segmented spread of each selling/buying in each divided time period (selling triggering price - buying triggering price), and then subtracting the cost of buying and selling in each comparison period (e.g. fees, taxes, etc.).
Wherein, the effective annualized rate performance of return on investment of step 4, step 5, step 6, step 7, step 8, step 9, step 10, step 11 and step 12 is [in the accounting period, (accumulation of product terms of the position weight ratios of individual divided time periods and spreads of the individual divided time periods = total cumulative profit and loss of each divided time period)÷ the closing price on the end day of the fixed base period ÷(number of trading days in the accounting period ×1.46÷365)];
the number of trading days for the accounting period mentioned above is the number of intra-period trading days during the first comparison period in case of the first comparison period, is (the number of intra-period trading days during the first comparison period + the number of intra-period trading days during the second comparison period) in case of the second comparison period, and is the cumulative number of intra-period trading days during each comparative period until the subsequent intra-period in case of the subsequent intra-period.

The multi-dimensional decision-making system and method for improving rate of return of the financial commodity in the present invention can also be applied to an investment portfolio so that the investment portfolio can also improve the rate of return, the method applied to the investment portfolio is as follows: the total investment amount of the investment portfolio is R, comprising S financial commodities; during the fixed base period, the investment amount of each financial commodity is R÷S, and the effective annualized rate of return on investment of cumulative total profit and loss of each financial commodity is obtained according to the investment technical indicator method. In addition, the effective annualized rate of return on investment of accumulated profit and loss experienced by each financial commodity in each comparison period is ranked; the position weight of each financial commodity in subsequent periods is dynamically adjusted and optimized period by period; taking the bull operation as an example, namely the financial commodity with a higher effective annualized rate of return on investment of accumulated profit and loss accumulated in each period until the accounting period, the position weight thereof in the total investment amount is relatively large. Therefore, the position weight ratio of individual financial commodity in the investment portfolio after position weight optimization of each financial commodity is multiplied by the profit and loss value of individual financial commodity during the period, and the product is used as the profit and loss of each financial commodity during the current period so as to be accumulated as the profit and loss of the investment portfolio after optimization during the period. In this way, the weight ratio of each financial commodity to the total investment amount is optimized and adjusted period by period, and the profit and loss of individual financial commodity in the investment portfolio is accumulated, which can improve the expected rate of return of the overall financial commodity portfolio and the effective annualized rate of return on investment of the overall cumulative total profit and loss of the investment portfolio is optimized and improved in multi-level.

Wherein, as described in step 4: (before the final closing price of the fixed base period, according to the investment risk degree predetermined by the system or selected by the investor, for the time-divided bull operation of the financial commodity, at least taking the highest two effective annualized rate of return on investment of the cumulative profit and loss of the divided time period, so as to assign the weight ratios of bull operation positions for the subsequent period of the last trading day of the intra-period trading days adjacent to the fixed base period, wherein for the effective annualized rate of return on investment of the cumulative profit and loss of the divided time period with a higher ranking, the weight ratio of bull operation position is higher or not lower than that of the effective annualized rate of return on investment of the cumulative profit and loss of the divided time period with a lower ranking); the position weight ratio of the effective annualized rate of return on investment of the highest two cumulative time-divided profit and loss is 50% and 50% in the order of the first and second highest.

Wherein, as described in step 5: (in the fixed base period, according to the investment risk degree predetermined by the system or selected by the investor, for the time-divided bear operation of the financial commodity, at least taking the lowest two effective annualized rate of return on investment of the cumulative profit and loss of the divided time period, so as to assign the weight ratios of bear operation positions for the subsequent period of the last trading day of the intra-period trading days adjacent to the fixed base period, wherein for the effective annualized rate of return on investment of the cumulative profit and loss of the divided time period with a lower ranking, the weight ratio of bear operation position is higher or not lower than that of the effective annualized rate of return on investment of the cumulative profit and loss of the divided time period with a higher ranking); the position weight ratio of the effective annualized rate of return on investment of the lowest two cumulative time-divided profit and loss is 50% and 50% in the order of the first and second lowest.

Wherein, as described in step 6: (during the fixed base period, according to the investment risk degree predetermined by the system or selected by the investor, for simultaneous hedging operations of the time-divided bull operation and time-divided bear operation of the financial commodity, at least taking the highest two and lowest two effective annualized rate of return on investment of the cumulative profit and loss of the divided time period, wherein for the effective annualized rate of return on investment of the cumulative profit and loss of the divided time period with a higher ranking, the weight ratio of the bull operation position is higher or not lower than that of effective annualized rate of return on investment of the cumulative profit and loss of the divided time period with a lower ranking in the subsequent period); and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period; the position weight ratio of the effective annualized rate of return on investment of the highest two cumulative time-divided profit and loss is 25% and 25% in the order of the first and second highest; and the position weight ratio of the effective annualized rate of return on investment of the lowest two cumulative time-divided profit and loss is 25% and 25% in the order of the first and second lowest.

Wherein, as described in step 7: (before the final closing price of the financial commodity in the fixed base period, the effective annualized investment return rate of operating profit and loss and cumulative profit and loss in each divided time period can be obtained and sorted, and the weight ratio of each time-divided position can be optimally allocated according to the ranking, which is taken as the weight ratio of each time-divided position in the first comparison period); as the effective annualized rate of return on investment of cumulative profit and loss of the divided time period in the fixed base period determines several divided time periods with high profit performance, the position weight ratio of each divided time period is optimized according to the ranking, which is applicable to the position weight ratio of divided time period in the subsequent first comparison period; and by using the time continuity characteristics of the two consecutive periods, the bull/bear direction and price trend of financial commodity have a high intensity correlation with the optimized position weight ratio, so as to optimize and improve the cumulative effective annualized rate of return on investment of the financial commodity during the first comparison period.

In other words, the present invention finds out several divided time periods with high profit performance by means of the above method, and therefore sets a higher position weight ratio, that is, it finds the difference that the financial commodity has different profit and loss at different divided time periods; the difference of different profit and loss at different divided time periods is a summary of the main factors of the financial commodity affecting the bull/bear direction of the stock price and the price trend. According to the difference of different profit and loss at the different divided time periods, the present invention dynamically optimizes and improves the rate of return on investment of the financial commodity by the above method period by period, which has new technical features.

Wherein, step 8: (taking at least the lowest two effective annualized rate of return on investment of the profit and loss value of each divided time period of financial commodity before the closing price of the last trading day of the first comparison period, and assigning and recording the position weight of the bear operation time-divided of financial commodity as the newly optimized position weight ratio of divided time period of the financial commodity in the subsequent period; in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time); as the setting of position weight of the time-divided before the closing price of the last trading day in the first comparison period determines several divided time periods with low profit performance, this setting method for position weight ratio of the time-divided is applicable to the trading day in the subsequent period, so as to improve the effective annualized rate of return on investment of cumulative profit and loss of financial commodity in the subsequent period.

Wherein, the multi-dimensional decision-making method for rate of return on investment of the financial commodity is implemented in an electronic device, which is a mobile phone, a stock machine, a tablet computer, a laptop computer, a desktop computer or an Internet of Things device.

It can be known from the above that the multi-dimensional decision-making method for rate of return on investment of the financial commodity of the present invention uses a decision indicator for the financial commodity by the electronic device; selects a base period, and selects a plurality of divided time periods for decision-making analysis at the same time. Firstly, the stock bull/bear trading decision-making system (see TW: 1436297) is used to obtain the cumulative value of profit and loss spread of the time-divided from the trigger points of bull/bear trading price of each divided time period of the financial commodity to the current period. By using the technical means of reducing a bull/bear uncertain risk of the bull/bear trading price level, the first level of the technology of reducing the bull/bear uncertain risk can make the financial commodity to achieve the improvement effect of the accuracy of determining the bull/bear direction of the financial commodity and the predictability of investment benefits. Secondly, the technical process and method of a multi-time-divided dynamic weight optimization period by period of effective annualized rate of return on investment of the multi-dimensional time-divided cumulative profit and loss of the financial commodity in the present invention can make use of the difference of profit and loss of the multi-time-divided synchronous operation according to the investment risk degree predetermined by the system or selected by the investor; in the same comparison period, each time-divided has different profit and loss spread and ranking of the effective annualized rate of return on investment of cumulative profit and loss of the time-divided. Intelligent optimization of the position weight ratio of such time-divided and the technical process and method of weight optimization are used to intelligently optimize the effective annualized rate of return on investment of cumulative profit and loss of the financial commodity during the period. The second level of the technology of multi-time-divided dynamic position weight optimization can greatly increase the effective annualized rate performance of return on investment of cumulative profit and loss of the financial commodity during the period, and if combined with bull/bear mixed spread and position weight ratio hedging operation, it can greatly reduce the systemic risk of individual stock of the financial commodity;
finally, according to the investment risk degree selected by the system or investor, in the same comparison period, for the investment portfolio of the plurality of financial commodities, the position weight ratio of each financial commodity is dynamically optimized in real-time by utilizing the period profit and loss difference of multi-dimensional multi-financial commodity synchronous operation, and then using the technical process and method of optimization of the position weight of the investment portfolio. In this way, the effective annualized rate performance of return on investment of the period profit and loss of each financial commodity can be improved period by period, so that the overall rate of return on investment of the investment portfolio can be adjusted and optimized intelligently period by period and achieve stable improvement effect. the cumulative effective annualized rate of return on investment of the overall investment portfolio is dynamically optimized in a third level.

The multi-dimensional decision-making method for the rate of return on investment of financial commodity in the present invention adopts the multi-level indicator decision making and the multi-dimensional divided time period-by-period dynamic position weight optimization technical means of the financial commodity, and extends to the real-time dynamic weighted optimization of the position weight of each financial commodity in the financial commodity portfolio, so as to achieve the optimization and improvement effect of the weight of overall rate of return on investment of each financial commodity and financial commodity portfolio thereof. It conforms to the benefits of intelligent optimization of the system and stable improving expected rate of return on investment, and indeed achieves the purpose of the present invention.

### BRIEF DESCRIPTION OF THE DRAWINGS

Fig. 1 is a functional block diagram of the present invention.
Fig. 2 is a data table for an embodiment of the present invention.
Fig. 3 is another data table for an embodiment of the present invention.
Fig. 4 is another data table for an embodiment of the present invention.

### DETAILED DESCRIPTION OF THE PREFERRED EMBODIMENTS

The contents described above in the present description is only one of the many embodiments of the present invention. In the actual use of the present invention, any method or means similar to or equivalent to the method and device described in the description may be used. The financial commodities, investment commodities and stocks in the description generally refer to the rights or derivative financial commodities or funds that can be traded in the market, such as options or warrants, which are collectively referred to as the financial commodities. The stock market is a place or means of trading stocks.

The following is the description of general composition of multi-dimensional decision-making method for improving rate of return on investment of financial commodities. The present invention discloses a method for performing calculations on a plurality of transaction data in a stock market database. The transaction data mentioned above each contains corresponding time data.

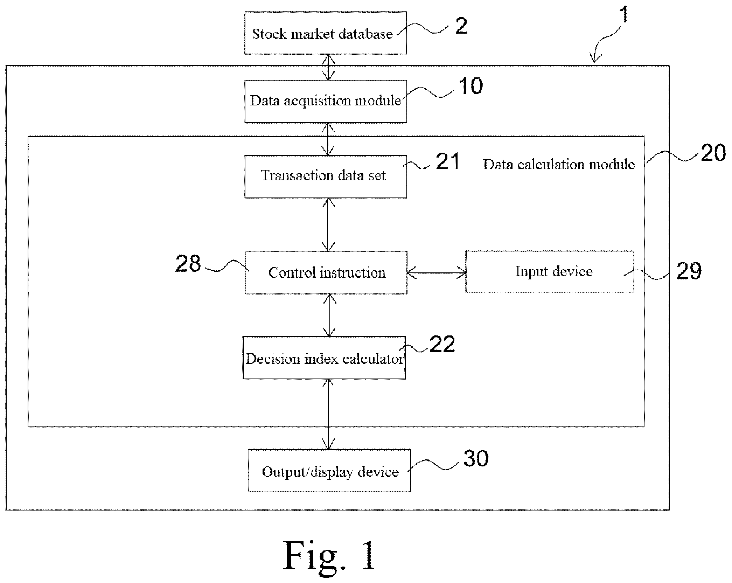

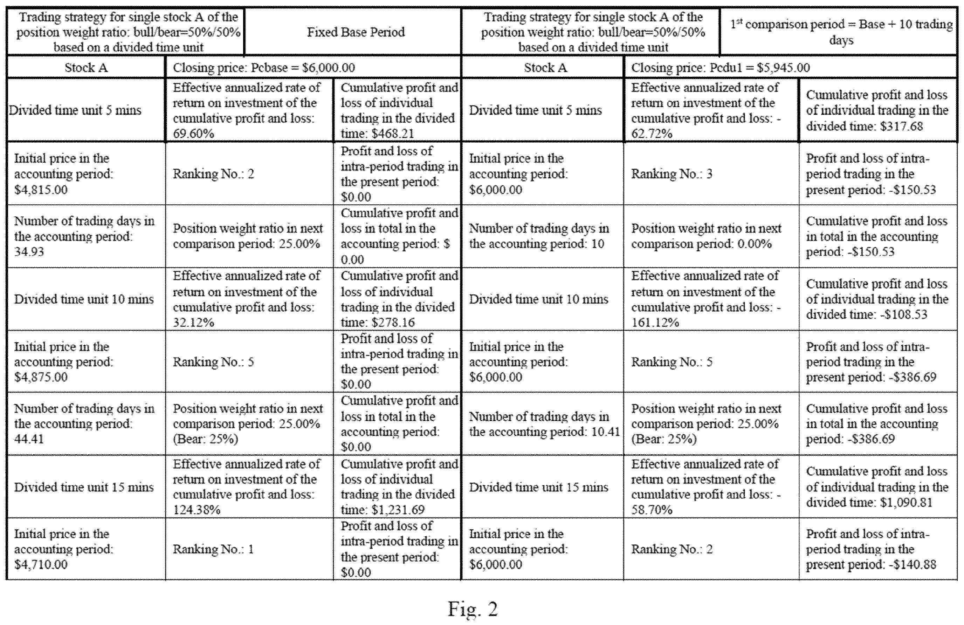

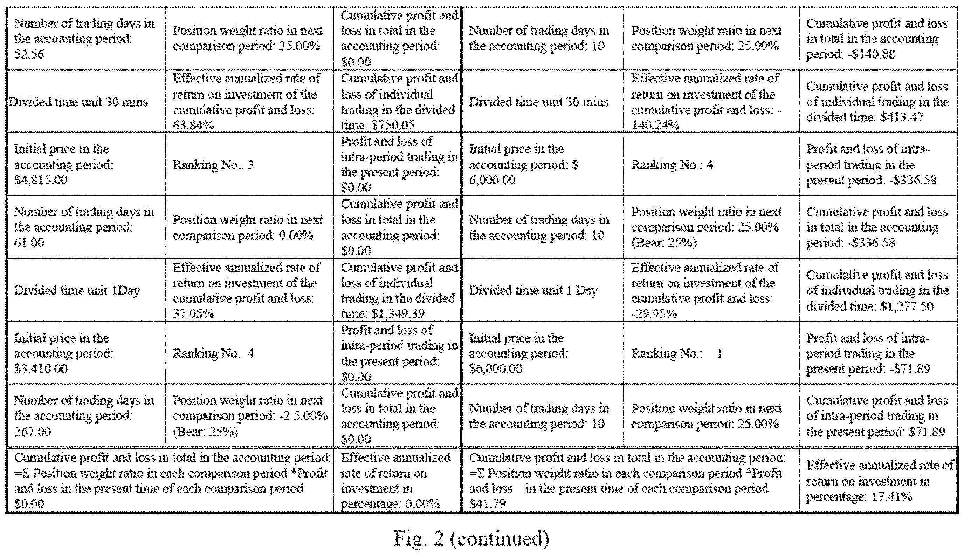

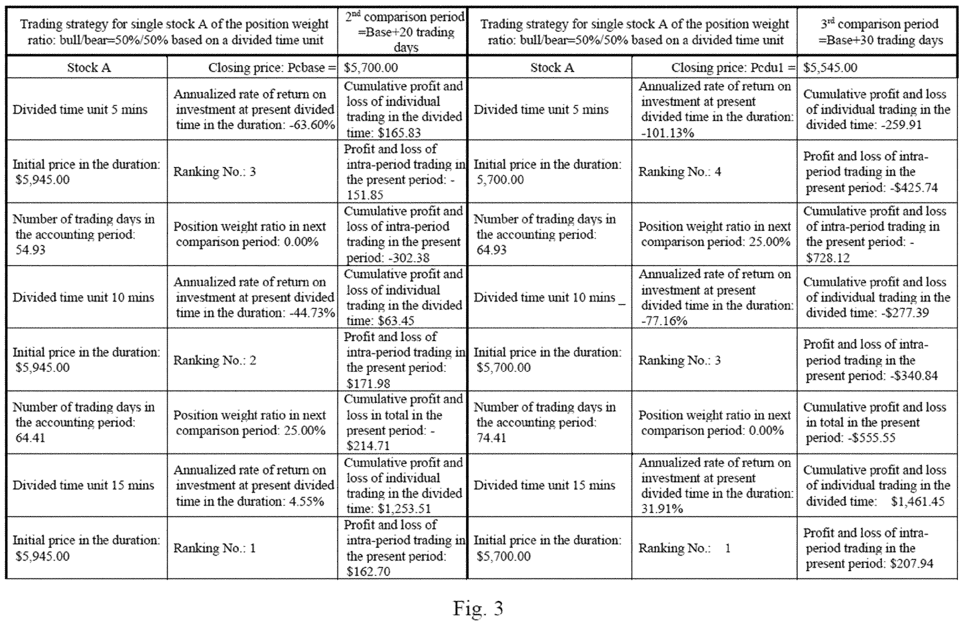

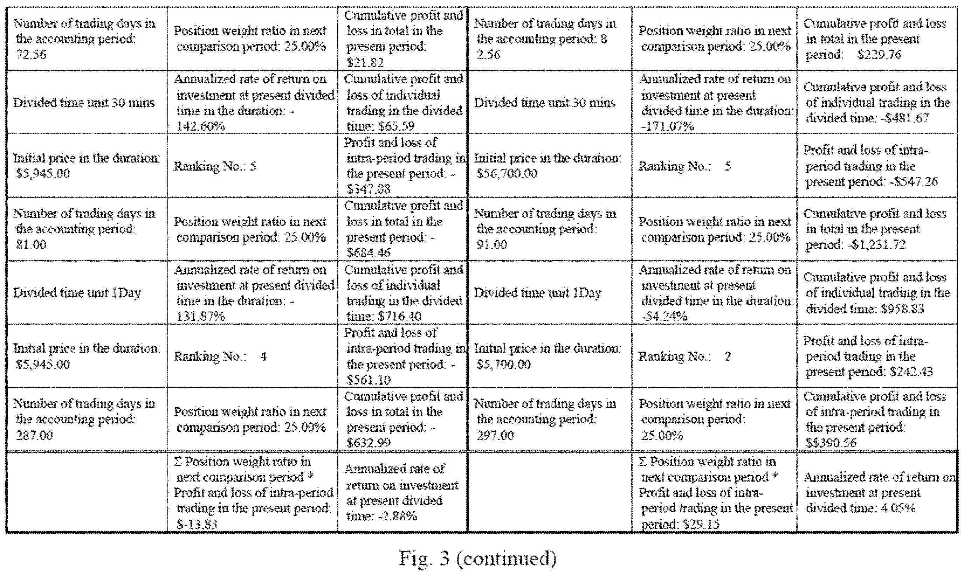

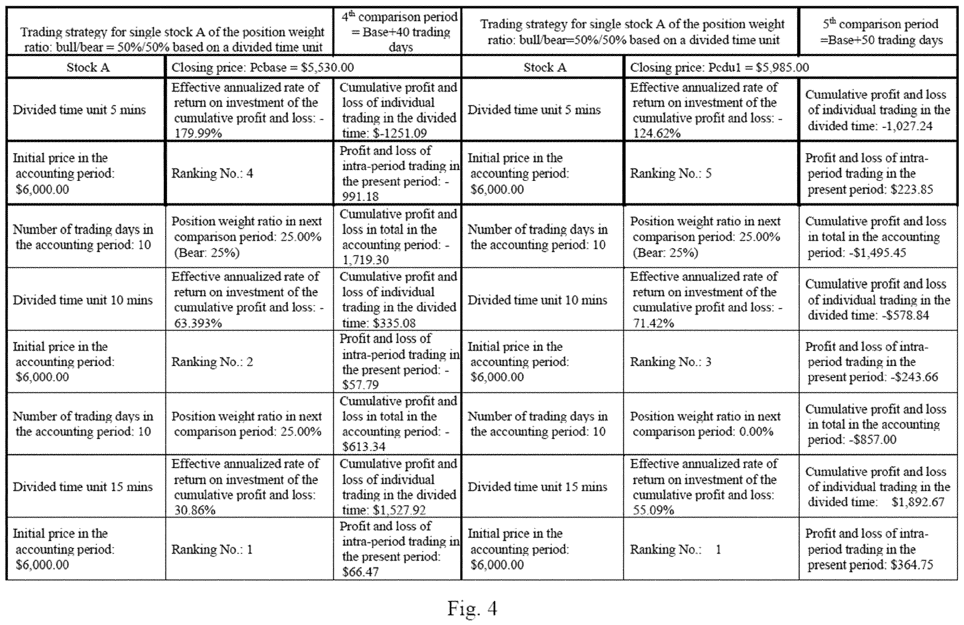

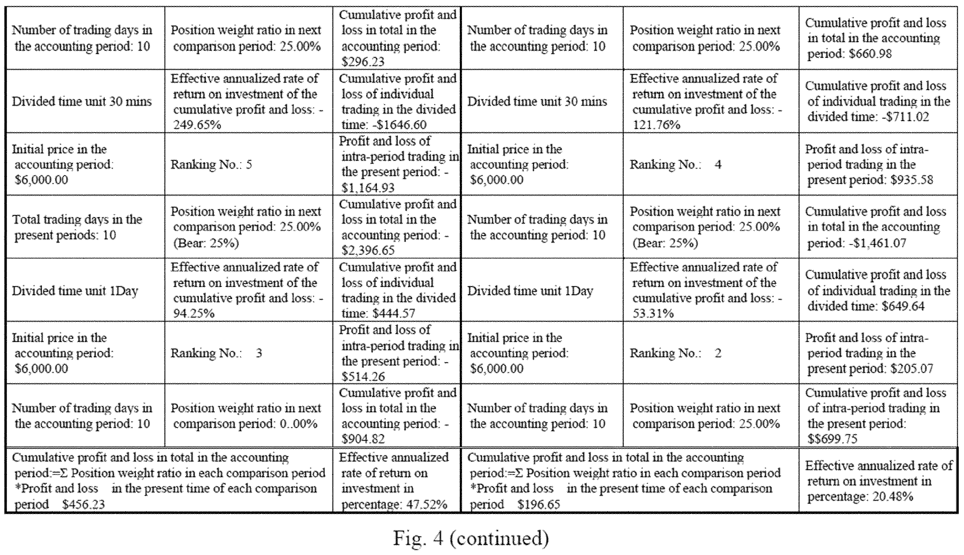

Please refer to Fig. 1, Fig. 2, Fig. 3 and Fig. 4. Fig. 1 illustrates a functional block diagram of a specific embodiment of the present invention; Fig. 2, Fig. 3 and Fig. 4 are three data tables of an embodiment of the present invention.

The scope of the present invention is to provide a multi-dimensional decision-making method 1 for improving rate of return on investment of financial commodities, which is used for calculating on the basis of a plurality of transaction data in a stock market database 2. The plurality of transaction data each contains a group of data such as financial commodity stock, the corresponding investment portfolio, stock symbol, date and price.

It can be seen from Fig. 1 that the multi-dimensional decision-making method 1 for rate of return on investment of financial commodities in the present invention comprises using a data acquisition module 10, using a data calculation module 20, and using an output/display device 30. The multi-dimensional decision-making method 1 for rate of return on investment of financial commodities can be implemented in any electronic device, such as a mobile phone, a stock machine, a tablet computer, a laptop computer, a desktop computer and an Internet of things device, etc., which is not limited to the examples given.

The data acquisition module 10 is coupled with the external stock market database 2, and the data calculation module 20 is coupled with the data acquisition module 10. The data calculation module 20 consists of a transaction data set 21, a control instruction 28, an input device 29, and a decision index calculator 22;
the transaction data set 21 of the data calculation module 20 is coupled with the data acquisition module 10, which automatically acquires a plurality of transaction data from the stock market database 2 and stores the plurality of transaction data into the transaction data set 21 at a frequency or period or a condition input by an investor. To be more specific, the data acquisition module 10 acquires the plurality of transaction data from an online or offline database of financial commodity and stock related data according to a default condition of the system or a condition entered by the investor. Transaction data may include the stock symbol, name, buying and selling prices, trading time, divided time periods, number of trading, or other data such as delivery time limit or class of stock.

After the transaction data is obtained by the data acquisition module 10, the transaction data would be stored and recorded in the transaction data set 21 in the data calculation module 20 for subsequent data analysis and processing.

The control instruction 28 is coupled with the transaction data set 21, the input device 29 and the decision index calculator 22;

As shown in embodiments of Fig. 2, the financial commodity is stock A.

The control instruction 28 is used for carrying out the following steps for the financial commodity:
step 1: selecting an investment technical index method for the financial commodity, wherein the investment technical indicator method comprises but is not limited to a technology used by a stock bull/bear trading decision-making system;
step 2: following step 1, setting a fixed base period which has an intra-period trading day; during the fixed base period, selecting a plurality of divided time periods for the financial commodity according to the investment technical indicator method, which are calculated by the decision index calculator; obtaining bull/bear trading triggering price points of each divided time period at the same time; according to an investment risk degree predetermined by the system or selected by an investor, using the investment technical indicator method to account the profit and loss spread of bull/bear trading triggering prices of the period; obtaining the profit and loss spread of each divided time period and the effective annualized rate of return on investment of cumulative profit and loss of the financial commodity before the closing of the fixed base period in the plurality of divided time periods; and ranking according to the effective annualized rate of return on investment of the cumulative profit and loss;
wherein, the technology used by [the stock bull/bear trading decision-making system] in step 1 refers to the technology disclosed in the patent invention No. 1436297 in Taiwan province [a stock bull/bear decision-making system]. The algorithm of the dynamic bull/bear decision-making system in the present invention comprises the following parameters: a bull/bear decision factor β calculated during or after the market, wherein β= (I×W1+J×W2+K×W3)÷C4+(1+θ×W4), where W1, W2, W3, W4 and C4 are the optimal weight values decided by the decision-making system; θ is the relative on-balance volume obtained by comparing today's stock market estimated volume divided by yesterday's stock market volume with the today's estimated volume of a stock divided by the yesterday's volume of the stock to obtain a real-time θ value; the opening strength I of the current day is calculated by comparing the difference between today's opening price and yesterday's closing price of a stock with the yesterday's closing price, and then selectively allocating a weight value C1 by the decision-making system to obtain the value I; the intraday real-time strength J is obtained by comparing the intraday trading price and the today's opening price of a stock with the today's opening price, and then selectively allocating a weight value C2 by the decision-making system to obtain the value J; and the intraday price amplitude K is obtained by comparing the difference between today's intraday highest price and lowest price of a stock with the yesterday's closing price of the stock and then selectively allocating a weight value C3 by the decision-making system to obtain the value K; a risk control interval (β2,β1) can be set by an investor or calculated by the decision-making system; when the bull/bear decision factor β > β1, a bull/buy signal is determined, and at this time the price of financial commodity is the buying triggering price; when the bull/bear decision factor β < β2, bear/sell signal is determined, and the price of the financial commodity is the selling triggering price.
wherein the time-divided bull/bear trading triggering price points in step 2 refers to the selling triggering price and buying triggering price of the financial commodity in different divided time periods obtained according to the investment technical indicator method, and the spread and profit and loss value of an individual divided time period of the current period can be accounted.
wherein the plurality of divided time periods refer to a plurality of different time periods. For example, if the divided time period is 15 minutes, every 15 minute is taken as a period, and the selling triggering price and buying triggering price of each period are obtained according to the investment technology indicator method in each period. As shown in the embodiment in Fig. 2, taking stock A and five time periods as an example. The time-divided units of the time periods are 5 minutes, 10 minutes, 15 minutes, 30 minutes, one trading day, etc.

As mentioned above: [step 2: ... during the fixed base period, selecting a plurality of divided time periods for the financial commodity according to the investment technical indicator method, which are calculated by the decision index calculator; obtaining bull/bear trading triggering price points of each divided time period at the same time; and according to an investment risk degree predetermined by the system or selected by an investor, using the investment technical indicator method to account the profit and loss spread of bull/bear trading triggering prices of the period; obtaining the profit and loss spread of each divided time period and the effective annualized rate of return on investment of cumulative profit and loss of the financial commodity before the closing of the fixed base period in the plurality of divided time periods; and ranking according to the effective annualized rate of return on investment of the cumulative profit and loss]. As shown in the embodiment in Fig. 2, in a fixed base period, the effective annualized rate of return on investment of the cumulative profit and loss of stock A in each divided time period is ranked. (The rate of return on the investment is listed in parentheses in a descending order). According to the order of time-divided units of 5 minutes, 10 minutes, 15 minutes, 30 minutes, one trading day, they are 69.6%(2), 32.12%(5), 124.38%(1), 63.84%(3), 37.05%(4), etc.
step 3: following step 2, carrying out different operations according to the investment risk degree predetermined by the system or selected by the investor as follows: continuing with step 4 in case of a bull operation; continuing with step 5 in case of a bear operation; and continuing with step 6 in case of a bull/bear mixed operation;
step 4: before the final closing price of the fixed base period, according to the investment risk degree predetermined by the system or selected by the investor, for the time divided bull operation of the financial commodity, at least taking the highest two effective annualized rate of return on investment of the cumulative profit and loss of the divided time period, so as to assign the weight ratios of bull operation positions for the subsequent period of the last trading day of the intra-period trading days adjacent to the fixed base period, wherein for the effective annualized rate of return on investment of the cumulative profit and loss of the divided time period with a higher ranking, the weight ratio of bull operation position is higher or not lower than that of the effective annualized rate of return on investment of the cumulative profit and loss of the divided time period with a lower ranking;
the prediction of the bull/bear attribute and price trend of the financial commodity is dominated by the weight of the position configured for bull operation after entering the subsequent period at the end of the fixed base period, so that the bull/bear attribute and price trend of an individual stock of the financial commodity can be predicted period by period, and the accuracy of the bull operation direction and efficiency of the effective annualized rate of return on investment of the cumulative profit and loss of the financial commodity in the subsequent period can be optimized and improved;
step 5: in the fixed base period, according to the investment risk degree predetermined by the system or selected by the investor, for the time-divided bear operation of the financial commodity, at least taking the lowest two effective annualized rate of return on investment of the cumulative profit and loss of the divided time period, so as to assign the weight ratios of bear operation positions for the subsequent period of the last trading day of the intra-period trading days adjacent to the fixed base period, wherein for the effective annualized rate of return on investment of the cumulative profit and loss of the divided time period with a lower ranking, the weight ratio of bear operation position is higher or not lower than that of the effective annualized rate of return on investment of the cumulative profit and loss of the divided time period with a higher ranking;
the prediction of the bull/bear attribute and price trend of the financial commodity is dominated by position weight of short operation after entering the subsequent period at the end of the fixed base period, so that the bull/bear attribute and price trend of an individual stock of the financial commodity can be predicted period by period, and the accuracy of the bear operation direction of the financial commodity in the subsequent period and the efficiency of the effective annualized rate of return on investment of cumulative profit and loss can be optimized and improved;
step 6: during the fixed base period, according to the investment risk degree predetermined by the system or selected by the investor, for simultaneous hedging operations of the time-divided bull operation and time-divided bear operation of the financial commodity, at least taking the highest two and lowest two effective annualized rate of return on investment of the cumulative profit and loss of the divided time period, wherein for the effective annualized rate of return on investment of the cumulative profit and loss of the divided time period with a higher ranking, the weight ratio of the bull operation position is higher or not lower than that of effective annualized rate of return on investment of the cumulative profit and loss of the divided time period with a lower ranking in the subsequent period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period;
in this way, for the financial commodity, from the effective annualized rate of return on investment of individual operating profit and loss and cumulative profit and loss of each divided time period before the final closing price of the fixed base period and the ranking thereof, the weight ratio of each time-divided bull operation/bear operation position in the subsequent period of a plurality of time-divided bull/bear mixed operations can be obtained by comparing and accounting;
the prediction of the bull/bear attribute and price trend of the financial commodity is dominated by a new set value of weight of a bull/bear mixed operation position optimized by multi-dimension time-divided decision-making after entering the subsequent period at the end of the fixed base period, so that the bull/bear attribute and price trend of an individual stock of the financial commodity can be predicted period by period, and the accuracy of the bull/bear mixed operation direction of the financial commodity in the subsequent period and the effective annualized rate performance of return on investment of cumulative profit and loss can be optimized and improved. In addition, due to the synchronous time-divided bull operation and time-divided bear operation mixed spread and position weight ratio hedging operation, the systemic risk of individual share of the financial commodity can be greatly reduced;

As above-mentioned [step 3: following step 2, carrying out the following steps in accordance with different operations: continuing with step 4 in case of a bull operation; continuing with step 5 in case of a bear operation; and continuing with step 6 in case of a bull/bear mixed operation;] . For example, the embodiment in Fig. 2 takes a bull/bear mixed operation, and the position weight ratios of bull/bear operation are 50% and 50% respectively as the embodiment.

In step 6 above, as shown in the embodiment of Fig. 2, the highest two effective annualized rates of return on investment of cumulative profit and loss of time-divided are: 124.38%(1) and 69.6%(2). The divided time periods thereof are 15 minutes and 5 minutes, and the position weight ratio of bull operation of time-divided is 50%(=25%+25%). The lowest two effective annualized rates of return on investment of cumulative profit and loss of time-divided are 32.12%(5) and 37.05%(4). The divided time periods thereof are 10 minutes and one trading day, and the position weight ratio of bear operation of time-divided is 50%(=25%+25%). Such position weight ratio can optimize the effective annualized rate of return on investment of accumulated profit and loss of the financial commodity in the next comparison period.

In the above method, step 7 can be added after step 4 if the bull operation is carried out, step 8 can be added after step 5 if the bear operation is carried out, and step 9 can be added after step 6 if the bull/bear mixed operation is carried out:
step 7: setting a first comparison period, wherein the first comparison period has an intra-period trading day, the intra-period trading day of the first comparison period follows the intra-period trading day of the fixed base period; before the final closing price of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
at the same time, by accounting the financial commodity up to the current period, the product term of the position weight ratios of individual divided time periods and the profit and loss values of the individual divided time periods for the bull operation is accumulated into the total profit and loss of the current period, which is used to account and record the cumulative total profit and loss and effective annualized rate of return performance of investment of the bull operation of the financial commodity during the first comparison period;
taking at least the optimal two effective annualized rate of return on investment of the cumulative profit and loss of the profit and loss value of each divided time period of financial commodity before the closing price of the last trading day of the first comparison period, and assigning and recording the position weight of divided time period of the financial commodity as the newly optimized position weight ratio of divided time period of the financial commodity in the subsequent period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time; as the ranking of effective annualized rate of return on investment of cumulative profit and loss can be used for assigning and optimizing a position weight ratio, the effectiveness of position weight under the bull operation of the individual financial commodity can be optimized and improved period by period, so as to multi-dimensionally adjust, optimize and improve the effective annualized rate performance of return on investment of the individual financial commodity during the subsequent comparison period period by period; therefore, the multi-dimensional intelligent decision-making method can adjust, optimize and improve the effective annualized rate performance of return on investment of the individual financial commodity during the subsequent comparison period;
step 8: setting a first comparison period, wherein the first comparison period has an intra-period trading day, the intra-period trading day of the first comparison period follows the intra-period trading day of the fixed base period;
before the final closing price of the current period of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
at the same time, by accounting the financial commodity up to the current period, the product term of the position weight ratios of individual divided time periods and the profit and loss values of the individual divided time periods for the bull operation is accumulated into the total profit and loss of the current period, which is used to account and record the cumulative total profit and loss and effective annualized rate of return performance of investment of the bear operation of the financial commodity during the first comparison period;
taking at least the lowest two effective annualized rate performance of return on investment of the profit and loss value of each divided time period of financial commodity before the closing price of the last trading day of the first comparison period, and assigning and recording the position weight of divided time period of the financial commodity as the newly optimized position weight ratio of divided time period of the financial commodity in the subsequent period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time; as the ranking of effective annualized rate performance of return on investment of cumulative profit and loss can be used for assigning and optimizing a position weight ratio, the effective annualized rate performance of return on investment of cumulative profit and loss of the individual financial commodity in the subsequent comparison period can be optimized and improved period by period;
step 9: setting a first comparison period, wherein the first comparison period has an intra-period trading day, the intra-period trading day of the first comparison period follows the period trading day of the fixed base period; before the final closing price of the current period of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
at the same time, by accounting the financial commodity up to the current period, the product term of the position weight ratios of individual divided time periods and the profit and loss values of the individual divided time periods for the bull/bear mixed operation is accumulated into the total profit and loss of the current period, which is used for accounting and recording the cumulative total profit and loss and the effective annualized rate performance of return on investment of the bull/bear mixed operation of the financial commodity until the first comparison period;
taking at least two highest and two lowest effective annualized rate of return on investment of the cumulative profit and loss of the divided time period, wherein for the effective annualized rate of return on investment of the cumulative profit and loss with a higher ranking, the weight ratio of the bull operation position is higher or not lower than that of effective annualized rate of return on investment of the cumulative profit and loss of the divided time period with a lower ranking in the subsequent period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period, as the position weight of each divided time period of the financial commodity in the subsequent period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
therefore, the multi-dimensional intelligent decision-making method can adjust, optimize and improve the effective annualized rate performance of return on investment of the individual financial commodity during the subsequent comparison period.
in the above method, step 10 can be added after step 7 if the bull operation is carried out, step 11 can be added after step 8 if the bear operation is carried out, and step 12 can be added after step 9 if the bull/bear mixed operation is carried out:
   step 10: setting a second comparison period, wherein the second comparison period has an intra-period trading day, the intra-period trading day of the second comparison period follows the intra-period trading day of the first comparison period;
   according to the investment technical indicator method, the calculation by the decision index calculator also obtains the cumulative value of the profit and loss spread of individual divided time periods of the financial commodity from each time-divided bull/bear trading triggering price points to the current period; before the final closing price of the current period in the first comparison period, the position weight ratio of each divided time period is optimized as the position weight ratio of each divided time period in the second comparison period;
   the effective annualized rate of return on investment of cumulative profit and loss of each time-divided can be obtained and ranked in the way of predetermining by the system or selecting by the investor; at the same time, by accounting the financial commodity up to the current period, the product term of the position weight ratios of individual divided time periods and the profit and loss values of the individual divided time periods for the bull operation is accumulated into the total profit and loss of the current period and the profit and loss spread generated by each time-divided position weight in the first comparison period is accumulated, which is used for accounting and recording the cumulative total profit and loss and the effective annualized rate performance of return on investment of the bull operation of the financial commodity until the second comparison period;
   taking at least the highest two effective annualized rate of return on investment of the cumulative profit and loss of each time-divided comparison period of the financial commodity before the closing price of the last trading day of the second comparison period, and assigning and recording the weight of each divided time period of the financial commodity, as the position weight of each divided time period of the financial commodity in the following period;
   in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
   in the process of multi-dimensional optimization of the bull/bear direction and the ups and downs of the price of the financial commodity, the ranking of the effective annualized rate of return on investment of the cumulative profit and loss of the time-divided positions in each comparison period is accounted and adjusted period by period and position weight ratio in the subsequent period is optimized to obtain the effective annualized rate of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of the individual financial commodity in each comparison period;
   step 11: setting a second comparison period, wherein the second comparison period has an intra-period trading day, the intra-period trading day of the second comparison period follows the intra-period trading day of the first comparison period;
   according to the investment technical indicator method, the calculation by the decision index calculator also obtains the cumulative value of the profit and loss spread of individual divided time periods of the financial commodity from each time-divided bull/bear trading triggering price points to the current period; before the final closing price of the current period in the first comparison period, the new position weight ratio of each divided time period is optimized as the position weight ratio of each divided time period in the second comparison period;
   the effective annualized rate of return on investment of cumulative profit and loss of each time-divided can be obtained and ranked in the way of predetermining by the system or selecting by the investor; at the same time, by accounting the financial commodity up to the current period, the product term of the position weight ratios of individual divided time periods and the profit and loss values of the individual divided time periods for the bear operation is accumulated into the total profit and loss of the current period and the profit and loss spread generated by each time-divided position weight in the first comparison period is accumulated, which is used for accounting and recording the cumulative total profit and loss and the effective annualized rate performance of return on investment of the bear operation of the financial commodity until the second comparison period;
   taking at least the lowest two effective annualized rate of return on investment of the cumulative profit and loss of each time-divided comparison period of the financial commodity before the closing price of the last trading day of the second comparison period, and assigning and recording the weight ranking of each divided time period of the financial commodity, as the position weight of each divided time period of the financial commodity in the following period;
   in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
   in the process of multi-dimensional optimization of the bull/bear direction and the ups and downs of the price of the financial commodity, the ranking of the effective annualized rate of return on investment of the cumulative profit and loss of the divided time periods in each comparison period is accounted and adjusted period by period and position weight ratio in the subsequent period is optimized to obtain the effective annualized rate performance of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of the individual financial commodity in each comparison period;
   step 12: setting a second comparison period, wherein the second comparison period has an intra-period trading day, the intra-period trading day of the second comparison period follows the intra-period trading day of the first comparison period;
   according to the investment technical indicator method, the calculation by the decision index calculator also obtains the cumulative value of the profit and loss spread of individual divided time periods of the financial commodity from each time-divided bull/bear trading triggering price points to the current period; before the final closing price of the current period in the first comparison period, the position weight ratio of each divided time period is optimized as the position weight ratio of each divided time period in the second comparison period;
   the effective annualized rate of return on investment of cumulative profit and loss of each time-divided can be obtained and ranked in the way of predetermining by the system or selecting by the investor; at the same time, by accounting the financial commodity up to the current period, the product term of the position weight ratios of individual divided time periods and the profit and loss values of the individual divided time periods for the bull/bear mixed operation is accumulated into the total profit and loss of the current period, which is used for accounting and recording the cumulative total profit and loss and the effective annualized rate performance of return on investment of the bull/bear mixed operation of the financial commodity until the second comparison period;
   taking at least the highest two and lowest two effective annualized rate performance of return on investment of the cumulative profit and loss of the financial commodity before the closing price of the last trading day of the second comparison period, and assigning and recording the weight ranking of each divided time period of the financial commodity, as the position weight of each divided time period of the financial commodity in the following period;
   in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
   in the process of multi-dimensional optimization of the bull/bear direction and the ups and downs of the price of the financial commodity, the ranking of the effective annualized rate of return on investment of the cumulative profit and loss of the time-divided positions in each comparison period is accounted and adjusted period by period and position weight ratio of bull operation or bear operation in the subsequent period is optimized to obtain the effective annualized rate of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of bull operation or bear operation of the individual financial commodity in each comparison period.

Wherein, the effective annualized rate of return on investment of the cumulative profit and loss in step 2, step 4, step 5, step 6, step 7, step 8, step 9, step 10, step 11 and step 12 is as follows:
during the fixed base period, the effective annualized rate of return on investment of the cumulative profit and loss is: (cumulative profit and loss of each divided time period of the fixed base period ÷ the closing price of the day previous the initial day of the fixed base period)÷(number of trading days in the accounting period×1.46÷365);
during each comparison period, the effective annualized rate of return on investment of the cumulative profit and loss is: (cumulative profit and loss of each period until the accounting period ÷ the closing price of the day on which the fixed base period ends)÷(number of trading days in the accounting period×1.46÷365);
the number of trading days for the accounting period mentioned above is the number of intra-period trading days during the fixed base period, is the number of intra-period trading days during the first comparison period in case of the first comparison period, is (the number of intra-period trading days during the first comparison period + the number of intra-period trading days during the second comparison period) in case of the second comparison period, and is the cumulative number of intra-period trading days during each comparative period until the subsequent intra-period in case of the subsequent intra-period.

The aforementioned (cumulative profit and loss of each period until the accounting period) is obtained as follows: obtaining the selling triggering price and buying triggering price according to the investment technical indicator in each divided time period during each comparison period, accumulating the segmented spread of each selling/buying in each divided time period (selling triggering price - buying triggering price), and then subtracting the cost of buying and selling in each comparison period (e.g. fees, taxes, etc.).

As shown in the embodiment of Fig. 2, during the fixed base period, the profit and loss spread value of 5-minute divided time period of stock A, namely the profit and loss spread value of 5-minute time-divided selling/buying divided time period of stock A, is $468.2 yuan, the closing price of the previous day on the initial day of the fixed base period is $4815 yuan, and the number of intra-period trading days during the fixed base period is 34.93 days. Intra-period trading days ×1.46 is the number of calendar days of the current period. Therefore, the effective annualized rate of return on investment of the cumulative profit and loss of the spread of time-divided selling/buying for 5 minutes in the current period of the fixed base period of the financial commodity =(468.2÷4815)=(34.93×1.46=365)=69.60%.

Wherein, the effective annualized rate performance of return on investment of the cumulative profit and loss of the financial commodity in step 4, step 5, step 6, step 7, step 8, step 9, step 10, step 11 and step 12 is [in the accounting period, (accumulation of product terms of the position weight ratios of individual divided time periods and spreads of the individual divided time periods = total cumulative profit and loss of each divided time period)÷ the closing price on the end day of the fixed base period ÷(number of trading days in the accounting period ×1.46÷365)];
the number of trading days for the accounting period mentioned above is the number of intra-period trading days during the first comparison period in case of the first comparison period, is (the number of intra-period trading days during the first comparison period + the number of intra-period trading days during the second comparison period) in case of the second comparison period, and is the cumulative number of intra-period trading days during each comparative period until the subsequent intra-period in case of the subsequent intra-period.

For example, in the embodiment of single stock A in Fig. 2, the position weight ratios of time-divided bull/bear operations are 50% and 50%, which is a time-divided bull/bear mixed operation. The numbers of trading days of all divided time periods in the fixed base period are 34.93 days, 44.41 days, 52.56 days, 61 days and 267 days respectively. Each time-divided trading day in the first comparison period is set as: the number of each original time-divided trading days in the fixed base period + 10 trading days, wherein the 10 trading days is the number of intra-period trading days in the first comparison period, which extends from the end of the original fixed base period to the number of intra-period trading days in the first comparison period. At the end of the fixed base period, the highest two cumulative effective annualized rates of return on investment (ranking) of each time-divided unit are 15minutes_124.38%(1) and 5minutes_69.60%(2), and the weight ratios of bull operation are 25% and 25%, respectively. The lowest two cumulative effective annualized rates of return on investment (ranking) of each time-divided are 10 minutes_32.12%(5) and 1 trading day_37.05%(4), and the weight ratios of bear operation of time-divided are 25% and 25% respectively. They can be used as the position weight ratios of time-divided bull/bear operation which are intelligently assigned in the later comparison period, so as to optimize and improve the cumulative profit and loss of time-divided operation up to the current period of the comparison period, so as to improve the effective annualized rate performance of return on investment of the financial commodity.

Furthermore, the trading days of the second comparison period are: the number of trading days of each divided time period in the fixed base period + 20 trading days, that is, the number of intra-period trading days in the first comparison period is 10 trading days, and the number of intra-period trading days in the second comparison period is 10 trading days. Based on the cumulative profit and loss of each period extends from the end of the original fixed base period to the first comparison period, accounting the highest two position weight ratios corresponding to the effective annualized rate of return on investment of cumulative profit and loss of each time-divided as - 29.95%(1) for 1 trading day and -58.70%(2) for 15 minutes. The weight ratios of bull operation time-divided are 25% and 25% respectively. The lowest two effective annual rates of return on investment of the cumulative profit and loss of each time-divided are
10 minutes -161.12%(5) and 30 minutes -140.24%(4), and the weight ratios of divided time period of bear operation are 25% and 25% respectively. The four weight ratios are used as the configured position weight ratios of time-divided optimized in the subsequent comparison period, so that the current operating profit and loss of the second comparison period can be adjusted and improved, and the effective annual rate performance of return on investment of cumulative profit and loss of the financial commodity up to the accounting period can be intelligently dynamic optimized by weights period by period.

The multi-dimensional decision-making system and method for improving rate of return of the financial commodity in the present invention can also be applied to an investment portfolio so that the investment portfolio can also improve the rate of return, the method applied to the investment portfolio is as follows: the total investment amount of the investment portfolio is R, comprising S financial commodities; during the fixed base period, the investment amount of each financial commodity is R÷S, and the effective annualized rate of return on investment of cumulative profit and loss of each financial commodity is obtained according to the investment technical indicator method. In addition, the effective annualized rate of return on investment of accumulated profit and loss experienced by each financial commodity in each comparison period is ranked; the position weight of each financial commodity in subsequent periods is adjusted and optimized period by period; taking the bull operation as an example, namely the financial commodity with a higher effective annualized rate of return on investment of accumulated profit and loss accumulated in each period until the accounting period, the position weight thereof in the total investment amount is relatively large. Therefore, the position weight ratio of individual divided time period after position weight optimization of each financial commodity is multiplied by the profit and loss value of individual time-divided during the period, and the product is used as the profit and loss of each financial commodity during the current period. In this way, the weight of each financial commodity to the total investment amount is optimized and adjusted period by period, and the profit and loss of each financial commodity is accumulated, which can improve the expected rate of return of the overall financial commodity portfolio and the overall cumulative effective annualized rate performance of return on investment of the of the investment portfolio is optimized and improved in multi-level.

As above-mentioned [step 3: following step 2, carrying out the following steps in accordance with different operations: continuing with step 4 in case of a bull operation; continuing with step 5 in case of a bear operation; and continuing with step 6 in case of a bull/bear mixed operation;]. For example, the embodiment in Fig. 2 takes a bull/bear mixed operation, and the position weight ratios of bull/bear operation are 50% and 50% respectively as the embodiment.

In step 6 above, as shown in the embodiment of Fig. 2, during the fixed base period, the highest two cumulative effective annualized rates of return on investment of time-divided are: 124.38%(1) and 69.6%(2). The divided time periods thereof are 15 minutes and 5 minutes, and the position weight ratios of bull operation of time-divided are 25%, 25%. The lowest two cumulative effective annualized rates of return on investment of divided time period are 32.12%(5) and 37.05%(4). The divided time periods thereof are 10 minutes and one trading day, and the position weight ratios of bear operation of time-divided are 25%, 25%. Such position weight ratio of bull/bear operation can optimize the effective annualized rate of return on investment of accumulated profit and loss of the financial commodity in the next comparison period.

Wherein, as described in step 4: (before the final closing price of the fixed base period, according to the investment risk degree predetermined by the system or selected by the investor, for the time-divided bull operation of the financial commodity, at least taking the highest two effective annualized rate of return on investment of the cumulative profit and loss of the divided time period, so as to assign the weight ratios of bull operation positions for the subsequent period of the last trading day of the intra-period trading days adjacent to the fixed base period, wherein for the effective annualized rate of return on investment of the cumulative profit and loss of the divided time period with a higher ranking, the weight ratio of bull operation position is higher or not lower than that of the effective annualized rate of return on investment of the cumulative profit and loss of the divided time period with a lower ranking); the position weight ratio of the effective annualized rate of return on investment of the highest two cumulative time-divided profit and loss is 50% and 50% in the order of the first and second highest.

Wherein, as described in step 5: (in the fixed base period, according to the investment risk degree predetermined by the system or selected by the investor, for the time-divided bear operation of the financial commodity, at least taking the lowest two effective annualized rate of return on investment of the cumulative profit and loss of the divided time period, so as to assign the weight ratios of bear operation positions for the subsequent period of the last trading day of the intra-period trading days adjacent to the fixed base period, wherein for the effective annualized rate of return on investment of the cumulative profit and loss of the divided time period with a lower ranking, the weight ratio of bear operation position is higher or not lower than that of the effective annualized rate of return on investment of the cumulative profit and loss of the divided time period with a higher ranking); the position weight ratio of the effective annualized rate of return on investment of the lowest two cumulative time-divided profit and loss is 50% and 50% in the order of the first and second lowest.

Wherein, as described in step 6: (during the fixed base period, according to the investment risk degree predetermined by the system or selected by the investor, for simultaneous hedging operations of the time-divided bull operation and time-divided bear operation of the financial commodity, at least taking the highest two and lowest two effective annualized rate of return on investment of the cumulative profit and loss of the divided time period, wherein for the effective annualized rate of return on investment of the cumulative profit and loss of the divided time period with a higher ranking, the weight ratio of the bull operation position is higher or not lower than that of effective annualized rate of return on investment of the cumulative profit and loss of the divided time period with a lower ranking in the subsequent period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period); the position weight ratio of bull operation of the effective annualized rate of return on investment of the highest two cumulative time-divided profit and loss is 25% and 25% in the order of the first and second highest; and the position weight ratio of bear operation of the effective annualized rate of return on investment of the lowest two cumulative time-divided profit and loss is 25% and 25% in the order of the first and second lowest.

Wherein, as described in step 7: (before the final closing price of the financial commodity in the fixed base period, the effective annualized investment return rate of operating profit and loss and cumulative profit and loss in each divided time period can be obtained and sorted, and the weight ratio of each time-divided position can be optimally allocated according to the ranking, which is taken as the weight ratio of each time-divided position in the first comparison period); as the effective annualized rate of return on investment of cumulative profit and loss of the divided time period in the fixed base period determines several divided time periods with high profit, the position weight ratio of each divided time period is optimized according to the ranking, which is applicable to the position weight ratio of divided time period in the subsequent first comparison period; and by using the time continuity characteristics of the two consecutive periods, the bull/bear direction and price trend of financial commodity have a high intensity correlation with the optimized position weight ratio, so as to optimize and improve the cumulative effective annualized rate of return on investment of the financial commodity during the first comparison period.

In other words, the present invention finds out several divided time periods with high profit by means of the above method, and therefore sets a higher position weight, that is, it finds the difference that the financial commodity has different profit and loss at different divided time periods; the difference of different profit and loss at different divided time periods is a summary of the characteristics of the financial commodity affecting the stock price. According to the difference of different profit at the different divided time periods, the present invention optimizes and improves the rate of return on investment of the financial commodity by the above method, which has new technical features.

Wherein, step 7: (taking at least the lowest two effective annualized rate of return on investment of the cumulative profit and loss value of financial commodity before the closing price of the last trading day of the first comparison period, and assigning and recording the position weight ratio of the original time-divided of financial commodity as the position weight ratio of financial commodity in the subsequent second comparison period; in this way, the bull/bear attributes and price trends of individual share of the financial commodity/stock can be predicted period by period, and the predictability of bull/bear directions of the financial commodity during the comparison period and the effectiveness of effective annualized rate of return on investment of cumulative profit and loss are adjusted and optimized at the same time); as the setting of position weight ratio of the time-divided before the closing price of the last trading day in the first comparison period determines several divided time periods with low profit and loss, this weight ratio of the time-divided is applicable to the trading day in the subsequent period, so as to improve the effective annualized rate of return on investment of cumulative profit and loss of financial commodity in the subsequent period.

Wherein, the multi-dimensional decision-making method for rate of return on investment of the financial commodity is implemented in an electronic device, which is a mobile phone, a stock machine, a tablet computer, a laptop computer, a desktop computer or an Internet of Things device.

It can be known from the above that the multi-dimensional decision-making method for rate of return on investment of the financial commodity of the present invention uses a decision indicator for the financial commodity by the electronic device; selects a base period, and selects a plurality of divided time periods for decision-making analysis at the same time. Firstly, the stock bull/bear trading decision-making system (see TW: I436297) is used to obtain the cumulative value of profit and loss spread of the time-divided from the trigger points of bull/bear trading price of each divided time period of the financial commodity to the current period. By using the technical means of reducing a bull/bear uncertain risk of the bull/bear trading price level, the first level of the technology of reducing the bull/bear uncertain risk can make the financial commodity to achieve the improvement effect of the accuracy of determining the bull/bear direction of the financial commodity and the predictability of investment benefits. Secondly, the technical process and method of a multi-time-divided dynamic position weight optimization period by period of effective annualized rate of return on investment of the multi-dimensional time-divided cumulative profit and loss of the financial commodity in the present invention can make use of the difference of profit and loss of the multi-time-divided synchronous operation according to the investment risk degree predetermined by the system or selected by the investor; in the same comparison period, each time-divided has different profit and loss spread and ranking of the effective annualized rate of return on investment of cumulative profit and loss of the time-divided. Intelligent optimization of the position weight ratio of such time-divided and the technical process and method of weight optimization are used to intelligently optimize the effective annualized rate of return on investment of cumulative profit and loss of the financial commodity during the period. The second level of the technology of multi-time-divided dynamic position weight optimization can greatly increase the effective annualized rate performance of return on investment of cumulative profit and loss of the financial commodity during the period, and if combined with bull/bear mixed spread and position weight ratio hedging operation, it can greatly reduce the systemic risk of individual share of the financial commodity;
finally, according to the investment risk degree selected by the system or investor, in the same comparison period, for the investment portfolio of the plurality of financial commodities, the position weight ratio of each financial commodity is dynamically optimized in real-time by utilizing the period profit and loss difference of multi-dimensional multi-financial commodity synchronous operation, and then using the technical process and method of optimization of the position weight of the investment portfolio. In this way, the effective annualized rate performance of return on investment of the period profit and loss of each financial commodity can be improved period by period, so that the overall rate of return on investment of the investment portfolio can be adjusted and optimized intelligently period by period and achieve stable improvement effect. the cumulative effective annualized rate of return on investment of the overall investment portfolio is dynamically optimized in a third level.

The multi-dimensional decision-making method for the rate of return on investment of financial commodity in the present invention adopts the multi-level indicator decision making and the multi-dimensional divided time period-by-period dynamic position weight optimization technical means of the financial commodity, and extends to the real-time dynamic weighted optimization of the position weight of each financial commodity in the financial commodity portfolio, so as to achieve the optimization and improvement effect of the weight of overall rate of return on investment of each financial commodity and financial commodity portfolio thereof. It conforms to the benefits of intelligent optimization of the system and stable improving expected rate of return on investment, and indeed achieves the purpose of the present invention.

### [Description of Reference Numerals]

1: Multi-dimensional decision-making method for improving rate of return on investment of financial commodities
10: Data acquisition module
2: Stock market database
20: Data calculation module
21: Transaction data set
22: Decision index calculator
28: Control instruction
29: Input device
30: Output/display device

## Claims

1. A multi-dimensional decision-making method for improving the rate of return of a financial commodity on an investment, which is used for calculating on the basis of a plurality of transaction data in a stock market database, wherein the plurality of transaction data respectively contains data of a corresponding financial commodity, a stock symbol, date and price;
the method comprises using a data acquisition module, and using a data calculation module; the data acquisition module is coupled with an external stock market database, and the data calculation module is coupled with the data acquisition module; and the data calculation module comprises a transaction data set, a control instruction, an input device and a decision index calculator;
the transaction data set of the data calculation module is coupled with the data acquisition module, which acquires a plurality of transaction data from the stock market database and stores the plurality of transaction data into the transaction data set;
the control instruction is coupled with the decision index calculator;
the control instruction is used for carrying out the following steps for the financial commodity:
step 1: selecting an investment technical indicator method for the financial commodity, wherein the investment technical indicator method comprises but is not limit to the technology used by a stock bull/bear trading decision-making system, and the technology is as follows: a bull/bear decision factor β is calculated during or after the market, wherein β= (I×W1+J×W2+K×W3)÷C4+(1+θ×W4), where W1, W2, W3, W4 and C4 are the optimal weight values decided by the decision-making system; θ is the relative on-balance volume obtained by comparing today's stock market estimated volume divided by yesterday's stock market volume with the today's estimated volume of a stock divided by the yesterday's volume of the stock to obtain a real-time θ value; the opening strength I of the current day is calculated by comparing the difference between today's opening price and yesterday's closing price of a stock with the yesterday's closing price, and then selectively allocating a weight value C1 by the decision-making system to obtain the value I; the intraday real-time strength J is obtained by comparing the intraday trading price and the today's opening price of a stock with the today's opening price, and then selectively allocating a weight value C2 by the decision-making system to obtain the value J; and the intraday price amplitude K is obtained by comparing the difference between today's intraday highest price and lowest price of a stock with the yesterday's closing price of the stock and then selectively allocating a weight value C3 by the decision-making system to obtain the value K; a risk control interval (β2,β1) can be set by an investor or calculated by the decision-making system; when the bull/bear decision factor β > β1, a bull/buy signal is determined, and at this time the price of financial commodity is the buying triggering price; when the bull/bear decision factor β < β2, bear/sell signal is determined, and the price of the financial commodity is the selling triggering price;
step 2: following step 1, setting a fixed base period which has an intra-period trading day; during the fixed base period, selecting a plurality of divided time periods for the financial commodity according to the investment technical indicator method, which are calculated by the decision index calculator; obtaining bull/bear trading triggering price points of each divided time period at the same time; according to an investment risk degree predetermined by the system or selected by an investor, using the investment technical indicator method to account the profit and loss spread of bull/bear trading triggering prices of the period; obtaining the profit and loss spread of each divided time period and the effective annualized rate of return on investment of cumulative profit and loss of the financial commodity before the closing of the fixed base period in the plurality of divided time periods; and ranking according to the effective annualized rate of return on investment of the cumulative profit and loss;
wherein the time-divided bull/bear trading triggering price points in step 2 refers to the selling triggering price and buying triggering price of the financial commodity in different divided time periods obtained according to the investment technical indicator method, and the spread and profit and loss value of an individual divided time period of the current period can be accounted;
wherein, the plurality of divided time periods refer to a plurality of different time periods;
step 3: following step 2, carrying out different operations according to the investment risk degree predetermined by the system or selected by the investor as follows: continuing with step 4 in case of a bull operation; continuing with step 5 in case of a bear operation; and continuing with step 6 in case of a bull/bear mixed operation;
step 4: before the final closing price of the fixed base period, according to the investment risk degree predetermined by the system or selected by the investor, for the time-divided bull operation of the financial commodity, at least taking the highest two effective annualized rate of return on investment of the cumulative profit and loss of the divided time period, so as to assign the weight ratios of bull operation positions for the subsequent period of the last trading day of the intra-period trading days adjacent to the fixed base period, wherein for the effective annualized rate of return on investment of the cumulative profit and loss of the divided time period with a higher ranking, the weight ratio of bull operation position is higher or not lower than that of the effective annualized rate of return on investment of the cumulative profit and loss of the divided time period with a lower ranking;
the prediction of the bull/bear attribute and price trend of the financial commodity is dominated by the weight of the position configured for bull operation after entering the subsequent period at the end of the fixed base period, so that the bull/bear attribute and price trend of an individual stock of the financial commodity can be predicted period by period, and the accuracy of the bull operation direction of the financial commodity in the subsequent period can be optimized and improved;
step 5: in the fixed base period, according to the investment risk degree predetermined by the system or selected by the investor, for the time-divided bear operation of the financial commodity, at least taking the lowest two effective annualized rate of return on investment of the cumulative profit and loss of the divided time period, so as to assign the weight ratios of bear operation positions for the subsequent period of the last trading day of the intra-period trading days adjacent to the fixed base period, wherein for the effective annualized rate of return on investment of the cumulative profit and loss of the divided time period with a lower ranking, the weight ratio of bear operation position is higher or not lower than that of the effective annualized rate of return on investment of the cumulative profit and loss of the divided time period with a higher ranking;
the prediction of the bull/bear attribute and price trend of the financial commodity is dominated by the weight of the position configured for bear operation after entering the subsequent period at the end of the fixed base period, so that the bull/bear attribute and price trend of an individual stock of the financial commodity can be predicted period by period, and the accuracy of the bear operation direction of the financial commodity in the subsequent period can be optimized and improved;
step 6: during the fixed base period, according to the investment risk degree predetermined by the system or selected by the investor, for simultaneous hedging operations of the time-divided bull operation and time-divided bear operation of the financial commodity, at least taking the highest two and lowest two effective annualized rate of return on investment of the cumulative profit and loss of the divided time period, wherein for the effective annualized rate of return on investment of the cumulative profit and loss of the divided time period with a higher ranking, the weight ratio of the bull operation position is higher or not lower than that of effective annualized rate of return on investment of the cumulative profit and loss of the divided time period with a lower ranking in the subsequent period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period;
in this way, for the financial commodity, from the effective annualized rate of return on investment of individual operating profit and loss and cumulative profit and loss of each divided time period before the final closing price of the fixed base period and the ranking thereof, the weight ratio of each time-divided bull operation/bear operation position in the subsequent period of a plurality of time-divided bull/bear mixed operations can be obtained by comparing and accounting;
the prediction of the bull/bear attribute and price trend of the financial commodity is dominated by a new set value of weight of a bull/bear mixed operation position optimized by multi-dimension time-divided decision-making after entering the subsequent period at the end of the fixed base period, so that the bull/bear attribute and price trend of the individual stock of the financial commodity can be predicted period by period, and the accuracy of the bull/bear mixed operation direction of the financial commodity in the subsequent period and the efficiency of the effective annualized rate of return on investment of cumulative profit and loss can be optimized and improved.

2. The multi-dimensional decision-making method for improving the rate of return of a financial commodity on an investment according to claim 1, wherein a step 7 can be added after step 4 if the bull operation is carried out, a step 8 can be added after step 5 if the bear operation is carried out, and a step 9 can be added after step 6 if the bull/bear mixed operation is carried out:
step 7: setting a first comparison period, wherein the first comparison period has an intra-period trading day, the intra-period trading day of the first comparison period follows the intra-period trading day of the fixed base period;
before the final closing price of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
at the same time, by accounting the financial commodity up to the current period, the product term of the position weight ratios of individual divided time periods and the profit and loss values of the individual divided time periods for the bull operation is accumulated into the total profit and loss of the current period, which is used for accounting and recording the cumulative total profit and loss and the effective annualized rate performance of return on investment of the bull operation of the financial commodity until the first comparison period;
taking at least the highest two effective annualized rate of return on investment of the cumulative profit and loss of the profit and loss value of each divided time period of financial commodity before the closing price of the last trading day of the first comparison period, and assigning and recording the position weight of the divided time period of the financial commodity as the newly optimized position weight ratio of the divided time period of the financial commodity in the following period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time; as the ranking of effective annualized rate of return on investment of cumulative profit and loss can be used for assigning and optimizing a position weight ratio, the effectiveness of position weight under the bull operation of the individual financial commodity can be optimized and improved period by period, so as to multi-dimensionally adjust, optimize and improve the effective annualized rate performance of return on investment of the individual financial commodity during the subsequent comparison period period by period; therefore, the multi-dimensional intelligent decision-making method can adjust, optimize and improve the effective annualized rate performance of return on investment of the individual financial commodity during the subsequent comparison period;
step 8: setting a first comparison period, wherein the first comparison period has an intra-period trading day, the intra-period trading day of the first comparison period follows the intra-period trading day of the fixed base period;
before the final closing price of the current period of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
at the same time, by accounting the financial commodity up to the current period, the product term of the position weight ratios of individual divided time periods and the profit and loss values of the individual divided time periods for the bear operation is accumulated into the total profit and loss of the current period, which is used for accounting and recording the cumulative total profit and loss and the effective annualized rate performance of return on investment of the bear operation of the financial commodity until the first comparison period;
taking at least the lowest two effective annualized rate performance of return on investment of the profit and loss value of each divided time period of financial commodity before the closing price of the last trading day of the first comparison period, and assigning and recording the position weight of the bear operation time-divided of financial commodity as the newly optimized position weight ratio of divided time period of the financial commodity in the following period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time; as the ranking of effective annualized rate performance of return on investment of cumulative profit and loss can be used for assigning and optimizing a position weight ratio, the effective annualized rate performance of return on investment of cumulative profit and loss of the individual financial commodity in the subsequent comparison period can be optimized and improved period by period;
step 9: setting a first comparison period, wherein the first comparison period has an intra-period trading day, the intra-period trading day of the first comparison period follows the intra-period trading day of the fixed base period;
before the final closing price of the current period of the financial commodity in the fixed base period, the effective annualized rate of return on investment of operation profit and loss in each divided time period and cumulative profit and loss can be obtained and ranked, and the position weight ratio of each divided time period can be optimally assigned according to the ranking, which is taken as the position weight ratio of each divided time period in the first comparison period;
according to the investment technical indicator method, the calculation by the decision index calculator also obtains the cumulative value of the profit and loss spread of individual divided time periods from each time-divided bull/bear trading triggering price point to the current period; each time-divided effective annualized rate of return on investment of cumulative profit and loss can be obtained and ranked in a way of predetermining by the system or selecting by the investor;
at the same time, by accounting the financial commodity up to the current period, the product term of the position weight ratios of individual divided time periods and the profit and loss values of the individual divided time periods for the bull/bear mixed operation is accumulated into the total profit and loss of the current period, which is used for accounting and recording the cumulative total profit and loss and the effective annualized rate performance of return on investment of the bull/bear mixed operation of the financial commodity until the first comparison period;
taking at least two highest and two lowest effective annualized rate of return on investment of the cumulative profit and loss of the divided time period, wherein for the effective annualized rate of return on investment of the cumulative profit and loss with a higher ranking, the weight ratio of the bull operation position is higher or not lower than that of effective annualized rate of return on investment of the cumulative profit and loss of the divided time period with a lower ranking in the subsequent period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period, as the position weight of each divided time period of the financial commodity in the following period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time.

3. The multi-dimensional decision-making method for improving the rate of return of a financial commodity on an investment according to claim 2, a step 10 can be added after step 7 if the bull operation is carried out, a step 11 can be added after step 8 if the bear operation is carried out, and a step 12 can be added after step 9 if the bull/bear mixed operation is carried out:
step 10: setting a second comparison period, wherein the second comparison period has an intra-period trading day, the intra-period trading day of the second comparison period follows the intra-period trading day of the first comparison period;
according to the investment technical indicator method, the calculation by the decision index calculator also obtains the cumulative value of the profit and loss spread of individual divided time periods of the financial commodity from each time-divided bull/bear trading triggering price points to the current period;
before the final closing price of the current period in the first comparison period, the position weight ratio of each divided time period is optimized as the position weight ratio of each divided time period in the second comparison period;
the effective annualized rate of return on investment of cumulative profit and loss of each time-divided can be obtained and ranked in the way of predetermining by the system or selecting by the investor; at the same time, by accounting the financial commodity up to the current period, the product term of the position weight ratios of individual divided time periods and the profit and loss values of the individual divided time periods for the bull operation is accumulated into the total profit and loss of the current period, which is used for accounting and recording the cumulative total profit and loss and the effective annualized rate performance of return on investment of the bull operation of the financial commodity until the second comparison period;
taking at least the optimal two effective annualized rate of return on investment of the cumulative profit and loss of each time-divided comparison period of the financial commodity before the closing price of the last trading day of the second comparison period, and assigning and recording the weight of each divided time period of the financial commodity, as the position weight of each divided time period of the financial commodity in the following period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
in the process of multi-dimensional optimization of the bull/bear direction and the ups and downs of the price of the financial commodity, the ranking of the effective annualized rate of return on investment of the cumulative profit and loss of the time-divided positions in each comparison period is adjusted period by period and position weight ratio in the following period is optimized to obtain the effective annualized rate of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of the individual financial commodity in each comparison period;
step 11: setting a second comparison period, wherein the second comparison period has an intra-period trading day, the intra-period trading day of the second comparison period follows the intra-period trading day of the first comparison period;
according to the investment technical indicator method, the calculation by the decision index calculator also obtains the cumulative value of the profit and loss spread of individual divided time periods of the financial commodity from each time-divided bull/bear trading triggering price points to the current period;
before the final closing price of the current period in the first comparison period, the new position weight ratio of each divided time period is optimized as the position weight ratio of each divided time period in the second comparison period;
the effective annualized rate of return on investment of cumulative profit and loss of each time-divided comparison period of the financial commodity can be obtained and ranked in the way of predetermining by the system or selecting by the investor;
at the same time, by accounting the financial commodity up to the current period, the product term of the position weight ratios of individual divided time periods and the profit and loss values of the individual divided time periods for the bear operation is accumulated into the total profit and loss of the current period and the profit and loss spread generated by each position weight in the first comparison period is accumulated, which is used for accounting and recording the cumulative total profit and loss and the effective annualized rate performance of return on investment of the bear operation of the financial commodity until the second comparison period;
taking at least the lowest two effective annualized rate of return on investment of the cumulative profit and loss of each time-divided comparison period of the financial commodity before the closing price of the last trading day of the second comparison period, and assigning and recording the weight ranking of each divided time period of the financial commodity, as the position weight of each divided time period of the financial commodity in the subsequent period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
in the process of multi-dimensional optimization of the bull/bear direction and the ups and downs of the price of the financial commodity, the ranking of the effective annualized rate of return on investment of the cumulative profit and loss of the divided time periods in each comparison period is adjusted period by period and position weight ratio in the subsequent period is optimized to obtain the effective annualized rate of return on investment of the individual financial commodity in the comparison period; therefore, the multi-dimensional decision-making method for rate of return on investment can intelligently optimize and improve the effective annualized rate performance of return on investment of cumulative profit and loss of the time-divided position of the individual financial commodity in each comparison period;
step 12: setting a second comparison period, wherein the second comparison period has an intra-period trading day, the intra-period trading day of the second comparison period follows the intra-period trading day of the first comparison period;
according to the investment technical indicator method, the calculation by the decision index calculator also obtains the cumulative value of the profit and loss spread of individual divided time periods of the financial commodity from each time-divided bull/bear trading triggering price points to the current period;
before the final closing price of the current period in the first comparison period, the position weight ratio of each divided time period is optimized as the position weight ratio of each divided time period in the second comparison period;
the effective annualized rate of return on investment of cumulative profit and loss of each time-divided comparison period of the financial commodity can be obtained and ranked in the way of predetermining by the system or selecting by the investor;
at the same time, by accounting the financial commodity up to the current period, the product term of the position weight ratios of individual divided time periods and the profit and loss values of the individual divided time periods for the bull/bear mixed operation is accumulated into the total profit and loss of the current period, which is used for accounting and recording the cumulative total profit and loss and the effective annualized rate performance of return on investment of the bull/bear mixed operation of the financial commodity until the second comparison period;
taking at least the highest two and lowest two effective annualized rate performance of return on investment of the cumulative profit and loss of the financial commodity before the closing price of the last trading day of the second comparison period, and assigning and recording the weight ranking of each divided time period of the financial commodity, as the position weight of each divided time period of the financial commodity in the following period;
in this way, the bull/bear attributes and price trends of individual stocks of the financial commodity can be predicted period by period, and the predictability of bull/bear directions of the financial commodity during the comparison period and the effectiveness of effective annualized rate of return on investment of cumulative profit and loss are adjusted and optimized at the same time;
in the process of multi-dimensional optimization of the bull/bear direction and the ups and downs of the price of the financial commodity, the ranking of the effective annualized rate of return on investment of the cumulative profit and loss of the time-divided positions in each comparison period is adjusted period by period and position weight ratio of bull operation or bear operation in the subsequent period is optimized to obtain the effective annualized rate performance of return on investment of the individual financial commodity in the comparison period.

4. The multi-dimensional decision-making method for improving the rate of return of a financial commodity on an investment according to claim 3, wherein the method be applied to an investment portfolio so that the investment portfolio also improve the rate of return, the method applied to the investment portfolio is as follows: the total investment amount of the investment portfolio is R, comprising S financial commodities; during the fixed base period, the investment amount of each financial commodity is R÷S, and the effective annualized rate of return on investment of cumulative profit and loss of each financial commodity is obtained according to the investment technical indicator method; the effective annualized rate of return on investment of accumulated profit and loss experienced by each financial commodity in each comparison period is ranked; the position weight of each financial commodity in subsequent periods is adjusted and optimized period by period, so that the position weight ratio of individual divided time period after position weight optimization of each financial commodity is multiplied by the profit and loss value of individual divided time periods, and the product is used as the profit and loss of each financial commodity during the current period so as to be accumulated as the profit and loss of the financial commodity during the period; in this way, the weight of each financial commodity to the total investment amount is optimized and adjusted period by period, and each profit and loss of each financial commodity is accumulated, which can improve the expected rate of return of the overall financial commodity portfolio and the overall cumulative effective annualized rate of return on investment of the investment portfolio is optimized and improved in multi-level.

5. The multi-dimensional decision-making method for improving the rate of return of a financial commodity on an investment according to claim 4, wherein the effective annualized rate of return on investment of the cumulative profit and loss in step 2, step 4, step 5, step 6, step 7, step 8, step 9, step 10, step 11 and step 12 is as follows:
during the fixed base period, the effective annualized rate of return on investment of the cumulative profit and loss is: (cumulative profit and loss of each divided time period of the fixed base period ÷ the closing price of the day previous the initial day of the fixed base period)÷(number of trading days in the accounting period×1.46÷365);
during each comparison period, the effective annualized rate of return on investment of the cumulative profit and loss is: (cumulative profit and loss of each period until the accounting period ÷ the closing price of the day on which the fixed base period ends)÷(number of trading days in the accounting period×1.46÷365);
the number of trading days for the accounting period mentioned above is the number of intra-period trading days during the fixed base period, is the number of intra-period trading days during the first comparison period in case of the first comparison period, is (the number of intra-period trading days during the first comparison period + the number of intra-period trading days during the second comparison period) in case of the second comparison period, and is the cumulative number of intra-period trading days during each comparative period until the subsequent intra-period in case of the subsequent intra-period;
the aforementioned (cumulative profit and loss of each period until the accounting period) is obtained as follows: obtaining the selling triggering price and buying triggering price according to the investment technical indicator in each divided time period during each comparison period, accumulating the segmented spread of each selling/buying in each divided time period (selling triggering price - buying triggering price) and then subtracting the cost of buying and selling in each comparison period.

6. The multi-dimensional decision-making method for improving the rate of return of a financial commodity on an investment according to claim 5, wherein the effective annualized rate performance of return on investment is in the accounting period, (accumulation of product terms of the position weight ratios of individual divided time periods and spreads of the individual divided time periods) ÷ the closing price on the end day of the fixed base period ÷ (number of trading days in the accounting period × 1.46 ÷ 365);
the aforementioned trading days of the accounting period is the number of intra-period trading days during the first comparison period in case of the first comparison period, is (the number of intra-period trading days during the first comparison period + the number of intra-period trading days during the second comparison period) in case of the second comparison period, and is the cumulative number of intra-period trading days during each comparative period up to the subsequent intra-period in case of the subsequent intra-period.

7. The multi-dimensional decision-making method for improving the rate of return of a financial commodity on an investment according to claim 1, wherein as described in step 4: (before the final closing price of the fixed base period, according to the investment risk degree predetermined by the system or selected by the investor, for the time-divided bull operation of the financial commodity, at least taking the highest two effective annualized rate of return on investment of the cumulative profit and loss of the divided time period, so as to assign the weight ratios of bull operation positions for the subsequent period of the last trading day of the intra-period trading days adjacent to the fixed base period, wherein for the effective annualized rate of return on investment of the cumulative profit and loss of the divided time period with a higher ranking, the weight ratio of bull operation position is higher or not lower than that of the effective annualized rate of return on investment of the cumulative profit and loss of the divided time period with a lower ranking); the position weight ratio of the effective annualized rate of return on investment of the highest two cumulative time-divided profit and loss is 50% and 50% in the order of the first and second highest.

8. The multi-dimensional decision-making method for improving the rate of return of a financial commodity on an investment according to claim 1, wherein as described in step 5: (in the fixed base period, according to the investment risk degree predetermined by the system or selected by the investor, for the time-divided bear operation of the financial commodity, at least taking the lowest two effective annualized rate of return on investment of the cumulative profit and loss of the divided time period, so as to assign the weight ratios of bear operation positions for the subsequent period of the last trading day of the intra-period trading days adjacent to the fixed base period, wherein for the effective annualized rate of return on investment of the cumulative profit and loss of the divided time period with a lower ranking, the weight ratio of bear operation position is higher or not lower than that of the effective annualized rate of return on investment of the cumulative profit and loss of the divided time period with a higher ranking); the position weight ratio of the effective annualized rate of return on investment of the lowest two cumulative time-divided profit and loss is 50% and 50% in the order of the first and second lowest.

9. The multi-dimensional decision-making method for improving the rate of return of a financial commodity on an investment according to claim 1, wherein as described in step 6: (during the fixed base period, according to the investment risk degree predetermined by the system or selected by the investor, for simultaneous hedging operations of the time-divided bull operation and time-divided bear operation of the financial commodity, at least taking the highest two and lowest two effective annualized rate of return on investment of the cumulative profit and loss of the divided time period, wherein for the effective annualized rate of return on investment of the cumulative profit and loss of the divided time period with a higher ranking, the weight ratio of the bull operation position is higher or not lower than that of effective annualized rate of return on investment of the cumulative profit and loss of the divided time period with a lower ranking in the subsequent period; and for the effective annualized rate of return on investment of the cumulative profit and loss of the divided time period with a lower ranking, the weight ratio of the bull operation position is higher or not lower than that of effective annualized rate of return on investment of the cumulative profit and loss of the divided time period with a higher ranking in the subsequent period); the position weight ratio of the effective annualized rate of return on investment of the highest two cumulative time-divided profit and loss is 25% and 25% in the order of the first and second highest; and the position weight ratio of the effective annualized rate of return on investment of the lowest two cumulative time-divided profit and loss is 25% and 25% in the order of the first and second lowest.

10. The multi-dimensional decision-making method for improving the rate of return of a financial commodity on an investment according to claim 2, wherein, as described in step 7: (before the final closing price of the financial commodity in the fixed base period, the effective annualized investment return rate of operating profit and loss and cumulative profit and loss in each divided time period can be obtained and sorted, and the weight ratio of each time-divided position can be optimally allocated according to the ranking, which is taken as the weight ratio of each time-divided position in the first comparison period); as the effective annualized rate of return on investment of cumulative profit and loss of the divided time period in the fixed base period determines several divided time periods with high profit performance, the position weight ratio of each divided time period is optimized according to the ranking, which is applicable to the position weight ratio of divided time period in the subsequent first comparison period; and by using the time continuity characteristics of the two consecutive periods, the bull/bear direction and price trend of financial commodity have a high intensity correlation with the optimized position weight ratio, so as to optimize and improve the cumulative effective annualized rate of return on investment of the financial commodity during the first comparison period.
